# EUROPEAN PATENT APPLICATION

(11) **EP 4 369 479 A1**
(43) Date of publication of application: **15.05.2024**
(21) Application number: 22917830.6
(22) Date of filing: 07.01.2022
(51) Int. Cl.: H01M 50/103, H01M 50/124

(54) **BATTERY CELL, MANUFACTURING METHOD AND MANUFACTURING DEVICE THEREFOR, BATTERY, AND ELECTRICAL DEVICE**

(71) Applicant: Contemporary Amperex Technology Co., Limited, Ningde, Fujian 352100 (CN)
(72) Inventor: LU, Li, Ningde, Fujian 352100 (CN); ZHANG, Nan, Ningde, Fujian 352100 (CN); ZHOU, Jian, Ningde, Fujian 352100 (CN); WANG, Hong, Ningde, Fujian 352100 (CN); LIU, Jiang, Ningde, Fujian 352100 (CN)
(74) Representative: von Tietzen und Hennig, Nikolaus
(86) International application number: PCT/CN2022/070747
(87) International publication number: WO 2023/130358

(57) **Abstract**

Embodiments of the present disclosure provide a battery cell, a manufacturing method and a manufacturing system therefor, a battery and an electrical device. The battery cell comprises a housing, an electrode assembly, an end cover and an isolating member. The housing is provided with an opening at an end along a first direction. The housing comprises a first side plate with a first plate body and a second plate body arranged along a second direction, the first plate body and the second plate body are welded to form a welding part extending to the opening, and the second direction is perpendicular to the first direction. The electrode assembly is accommodated in the housing. The end cover is used for covering the opening. The isolating member is arranged between the first side plate and the electrode assembly, and attached to the first side plate and covers at least part of the welding part to isolate the electrode assembly from the welding part. In the present disclosure, the isolating member can isolate the electrode assembly from the welding part, to reduce a risk of the electrode assembly being punctured by the welding part and to improve safety.

## Description

### TECHNICAL FIELD

The present disclosure relates to the field of battery technology, and more particularly, to a battery cell and a manufacturing method and a manufacturing system therefor, a battery and an electrical device.

### BACKGROUND

Battery cells are widely used in electronic devices, such as cell phones, laptops, battery cars, electric cars, electric airplanes, electric ships, electric toy cars, electric toy ships, electric toy airplanes, and electric tools. The battery cells can include cadmium-nickel battery cells, nickel-hydrogen battery cells, lithium-ion battery cells, and secondary alkaline zinc-manganese battery cells.

In a development of battery technology, in addition to improving the performance of battery cells, safety is also a problem that cannot be ignored. If the safety of a battery cell cannot be guaranteed, the battery cell cannot be used. Therefore, how to enhance the safety of battery cell is an urgent technical problem in battery technology.

### SUMMARY

The present disclosure provides a battery cell and a manufacturing method and a manufacturing system therefor, a battery and an electrical device, to improve the safety of the battery cell.

In a first aspect, an embodiment of the present disclosure provides a battery cell, comprising a housing, an electrode assembly, an end cover and an isolating member. The hosing is provided with an opening at an end along a first direction. The housing comprises a first side plate with a first plate body and a second plate body arranged along a second direction, the first plate body and the second plate body are welded to form a welding part extending to the opening, and the second direction is perpendicular to the first direction. The electrode assembly is accommodated in the housing. The end cover is used for covering the opening. The isolating member is arranged between the first side plate and the electrode assembly, and attached to the first side plate and covers at least part of the welding part to isolate the electrode assembly from the welding part.

In the above solution, the isolating member can isolate the electrode assembly from the welding part, to reduce a risk of the electrode assembly being punctured by the welding part and to improve safety. As the isolating member covers at least part of the welding part, it can shield residual particles on the welding part, reducing the risk of short circuit caused by particles falling into the electrode assembly and improving safety.

In an embodiment, the isolating member comprises a substrate and a bonding layer, the substrate covers at least part of the welding part, and the bonding layer is located between and bonded to the substrate and the first side plate.

In the above solution, the boding layer can ensure a connection strength between the substrate and the first side plate, and simplify an assembly process of the isolating member and the first side plate.

In an embodiment, at least part of the bonding layer is bonded to the welding part.

In the above solution, the bonding layer is viscous, which can be bonded to residual particles on an surface of the welding part to fix the particles, thereby reducing the risk of short circuit caused by particles falling into the electrode assembly, and improving safety

In an embodiment, a hardness of the substrate is greater than a hardness of the bonding layer.

In the above solution, the substrate has a higher hardness, which is more difficult to be punctured by the welding part than the bonding layer. In this way, the substrate can effectively isolate the welding part from the electrode assembly, reducing the risk of short circuit and improving safety

In an embodiment, the battery cell further comprises an insulating member arranged on a side of the end cover facing the electrode assembly and used for insulating and isolating the end cover from the electrode assembly. The insulating member and the substrate are arranged at intervals along the first direction.

In the above solution, the insulating member and the substrate are arranged at intervals along the first direction, to reduce the risk of interference between the insulating member and the substrate plate during a process of the insulating member extending into the housing, prevent the substrate from being squeezed by the insulating member, and ensure that the substrate is fixed on the first side plate

In an embodiment, the battery cell further comprises a bonding member, wherein at least part of the bonding member is located between the first side plate and the insulating member and is bonded to a part of the welding part not covered by the isolating member.

In the above solution, the bonding member is bonded residual particles on the surface of the welding part to reduce the risk of short circuit caused by particles falling into the electrode assembly. The bonding member can also isolate the insulating member from the welding part, to reduce the risk of the insulating member being scratched by the welding part and improving safety

In an embodiment, a thickness of the bonding member is less than a thickness of the isolating member.

In the above solution, the bonding member has a smaller thickness, which can reduce the risk of the insulating member squeezing the bonding member and the possibility of the bonding member falling off during the process of the insulating member extending into the housing, so as to ensure the safety performance.

In an embodiment, the bonding member comprises a first bonding part and a second bonding part arranged continuously, the first bonding part and the isolating member are arranged along the first direction and used to be bonded with the welding part, and at least part of the second bonding part is bonded to a surface of the substrate facing the electrode assembly.

In the above solution, the first bonding part can be bonded to a part of the welding part not covered by the isolating member, to fix the residual particles on the surface of the welding part to reduce the risk of short circuit caused by particles falling into the electrode assembly. Since the first bonding part is connected to the first side plate and the second bonding part is connected to the substrate, the bonding member can also fix the substrate to the first side plate, to improve a connection strength between the first side plate and the substrate, and reduce the risk of the substrate falling off.

In an embodiment, the bonding member and the bonding layer are integrally formed.

In the above solution, a forming process of the bonding member and the bonding layer is simplified to improve an assembly efficiency of the battery cell.

In an embodiment, a surface of the isolating member facing the first side plate is provided with a concave part which is used to accommodate at least part of the welding part.

In the above solution, the concave part can provide accommodation space for the welding part to reduce a contacting area between the welding part and the isolating member to reduce the risk of the isolating member being punctured by the welding part.

In an embodiment, a surface of the isolating member away from the first side plate is provided with an opening arranged to be staggered with the welding part.

In the above solution, the opening can reduce the weight of the isolating member and provide more accommodating room for electrolyte, and improve the performance of the battery cell. In the above solution, the opening and the welding part are staggered to reduce the risk of the welding part passing through the isolating member through the opening and improve the safety

In an embodiment, the housing is provided with openings at both ends along the first direction, and is in a cylindrical structure formed by bending a flat plate, and a joint of the cylindrical structure is welded to form the welding part.

In the above solution, a forming process of the housing is simplified and a strength of the housing is ensured.

In an embodiment, the housing further comprises two second side plates arranged along the second direction, one second side plate is connected to the first plate body through one transition plate, and the other second side plate is connected to the second plate body through another one transition plate. An inner surface of the transition plate is formed as an arc surface, the isolating member supports the electrode assembly so that the minimum spacing between a pole sheet of the electrode assembly and the arc surface is greater than a preset value.

In the above solution, the isolating member can support the electrode assembly, so that the minimum spacing between a pole sheet of the electrode assembly and the arc surface is greater than a preset value. Thus a force transmitted to an end of the pole sheet is reduced when the battery cell vibrates, to reduce the risk of an active material of the pole sheet falling off and improve safety.

In an embodiment, an area of the second side plate is greater than an area of the first side plate.

In an embodiment, a dimension of the housing along the first direction is ranged from 100 mm to 2000 mm.

In the above solution, the dimension of the battery cell along the first direction is large enough to match the dimension of a box. A plurality of battery cells can be arranged directly in parallel in the box, without assembling the battery cells into a battery module at first. Therefore, a frame structure of the battery module for fixing the battery cells can be omitted and an internal space of the battery can be saved, to improve a space utilization rate and energy density of the battery, simplify an assembly process of the battery cell and reduce the cost.

In an embodiment, the electrode assembly comprises a plurality of a first pole sheets and a plurality of a second pole sheets alternately stacked along the second direction, and the first pole sheets and the second pole sheets have opposite polarities. In another embodiment, the electrode assembly comprises a first pole sheet and a plurality of second pole sheets, the first pole plate is continuously bent and comprises a plurality of stacked segments and a plurality of bending segments alternately stacked along the second direction, and respective bending segments are used to connect adjacent two stacked segments.

In a second aspect, an embodiment of the present disclosure provides a battery comprising a plurality of battery cells of any one of embodiments in the first aspect.

In an embodiment, in at least one of the battery cells, the first side plate is arranged on a lower side of the electrode assembly along a vertical direction.

In a third aspect, an embodiment of the present disclosure provides an electrical device comprising the battery of any one of embodiments in the second aspect and used to provide electrical energy.

In a fourth aspect, an embodiment of the present disclosure provides a manufacturing method for a battery cell, comprising:
providing a housing with an opening at an end along a first direction, wherein the housing comprises a first side plate with a first plate body and a second plate body arranged along a second direction, the first plate body and the second plate body are welded to form a welding part extending to the opening, and the second direction is perpendicular to the first direction;
providing an isolating member and attaching the isolating member to the first side plate to cover at least part of the welding part by the isolating member;
providing an electrode assembly and installing the electrode assembly in the housing; and
providing an end cover and covering the opening of the housing by the end cover;
wherein the isolating member is arranged between the first side plate and the electrode assembly to isolate the electrode assembly from the welding part.

In an embodiment, the step of providing an isolating member and attaching the isolating member to the first side plate comprises: coating an adhesive on the first side plate; and providing a substrate, extending the substrate into the housing and bonding the substrate to the adhesive so that the substrate covers at least part of the welding part. The adhesive solidifies to form a bonding layer to form the isolating member together with the substrate.

In another embodiment, the step of providing an isolating member and attaching the isolating member to the first side plate comprises: providing a substrate and coating an adhesive on a surface of the substrate; and extending the substrate into the housing and bonding the adhesive to the first side plate and covering at least part of the welding part by the substrate. The adhesive solidifies to form a bonding layer to form the isolating member together with the substrate.

Compared to the adhesive coated inside the housing, the process of coating the adhesive on the substrate is simpler in the above solution.

In a fifth aspect, an embodiment of the present disclosure provides a manufacturing system for a battery cell, comprising a first providing device, a second providing device, a third providing device and a fourth providing device. The first providing device is used for providing a housing with an opening at an end along a first direction, wherein the housing comprises a first side plate with a first plate body and a second plate body arranged along a second direction, the first plate body and the second plate body are welded to form a welding part extending to the opening, and the second direction is perpendicular to the first direction. The second providing device is used for providing an isolating member and attaching the isolating member to the first side plate to cover at least part of the welding part by the isolating member. The third providing device is used for providing an electrode assembly and installing the electrode assembly in the housing. The fourth providing device is used for providing an end cover and covering the opening of the housing by the end cover. The isolating member is arranged between the first side plate and the electrode assembly to isolate the electrode assembly from the welding part.

In an embodiment, the second providing device comprises: a first gluing mechanism used to coat the adhesive on the first side plate; a first assembly mechanism for providing a substrate, extending the substrate into the housing and bonding it to the adhesive so that the substrate covers at least part of the welding part. The adhesive solidifies to form a bonding layer to form the isolating member together with the substrate.

In another embodiment, the second providing device comprises: a second gluing mechanism for providing a substrate and coating the adhesive on an surface of the substrate; a second assembly mechanism for extending the substrate into the housing and bonding the adhesive to the first side plate and covering at least part of the welding part by the substrate. The adhesive solidifies to form a bonding layer to form the isolating member together with the substrate.

In the above solution, the second gluing mechanism directly coats the adhesive on the substrate without extending into the housing, to simplify the gluing process and improve an assembly efficiency of the battery cell.

### BRIEF DESCRIPTION OF THE DRAWINGS

In order to more clearly illustrate technical solutions of embodiments of the present disclosure, appended drawings required to be used in embodiments of the present disclosure will be briefly introduced below. Obviously, the appended drawings described below only show some embodiments of the present disclosure. For those skilled in the art, without any creative effort, other drawings are also available based on the drawings.
FIG. 1 is a structural diagram of a vehicle provided in some embodiments of the present disclosure;
FIG. 2 is an exploded diagram of a battery provided in some embodiments of the present disclosure;
FIG. 3 is a perspective structural diagram of a battery cell provided in some embodiments of the present disclosure;
FIG. 4 is an exploded diagram of the battery cell as shown in FIG. 3;
FIG. 5 is a cross-sectional diagram of the battery cell as shown in FIG. 3;
FIG. 6 is an enlarged diagram of the battery cell at a circle A as shown in FIG. 5;
FIG. 7 is another sectional diagram of the battery cell as shown in FIG. 3;
FIG. 8 is an enlarged diagram of the battery cell at a circle B as shown in FIG. 7;
FIG. 9 is a schematic partial sectional diagram of a battery cell provided in some other embodiments of the present disclosure;
FIG. 10 is a schematic partial sectional diagram of a battery cell provided in some other embodiments of the present disclosure;
FIG. 11 is an enlarged diagram of the battery cell at a circle C as shown in FIG. 5;
FIG. 12 is a schematic diagram of an electrode assembly of a battery cell provided in some embodiments of the present disclosure;
FIG. 13 is a schematic diagram of an electrode assembly of a battery cell provided in some other embodiments of the present disclosure;
FIG. 14 is a flow diagram of a manufacturing method for a battery cell provided in some embodiments of the present disclosure;
FIG. 15 is a schematic block diagram of a manufacturing system for a battery cell provided in some embodiments of the present disclosure;
FIG. 16 is a schematic block diagram of a manufacturing system for a battery cell provided in some other embodiments of the present disclosure.

In the drawings, figures are not drawn to actual scale.

### DETAILED DESCRIPTION

In order to make purposes, technical solutions and advantages of embodiments of the present disclosure clearer, technical solutions of embodiments of the present disclosure will be clearly described in combination with appended drawings of embodiments of the present disclosure. Obviously, embodiments to be described are a part of embodiments of the present disclosure, but not all embodiments. On the basis of embodiments of the present disclosure, all other embodiments acquired by those skilled in the art without creative effort shall fall within the protection scope of the present disclosure.

Unless otherwise defined, all technical and scientific terms used in the present disclosure have the same meaning as those normally understood by those skilled in the art of the present disclosure. Terms used in the present disclosure in the specification of the present disclosure are for the purpose of describing specific embodiments only and are not intended to restrict the present disclosure. Terms "include" and "have" in the specification and claims of the present disclosure and in the above appended drawings, and any variation thereof, are intended to cover non-exclusive inclusion. Terms "first", "second", etc. in the specification and claims of the present disclosure or in the above appended drawings are used to distinguish between different objects and are not used to describe a particular sequence or primary or secondary relationship.

The term "embodiment" in the present disclosure means that a particular feature, structure or characteristic described in conjunction with the embodiment may be included in at least one embodiment of the present disclosure. The term at various locations in the specification does not necessarily refer to the same embodiment, nor is it a separate or alternative embodiment that is mutually exclusive with other embodiments.

In the description of the present disclosure, it is important to note that, unless otherwise expressly specified and qualified, terms "install", "connected to", "connected with" and "attach" are to be construed broadly, for example, it may be a fixed connection, a detachable or integrated connection; it may be a direct connection, an indirect connection through an intermediary, it can be an internal communication within two components. For those skilled in the art, specific meanings of the above terms in the present disclosure can be understood on a case-by-case basis.

Terms "and/or" in the present disclosure only indicates an association relation describing associated objects, indicating that there can be three kinds of relations, for example, A and/or B can mean: A exists alone, A and B exist simultaneously, and B exists alone. In addition, the character "/" in the present disclosure generally means a "or" relationship of associated objects.

In embodiments of the present disclosure, the same reference sign represents the same part, and for brevity, a detailed description of the same part is omitted in different embodiments. It is understood that a thickness, length, width, etc., of various components and an overall thickness, length, width, etc., of an integrated device shown in the illustrated embodiments of the present disclosure are illustrative only and should not constitute any restriction to the present disclosure.

The term "a plurality of" as used in the present disclosure means more than two (including two).

The term "parallel" in the present disclosure includes not only an absolute parallel case, but also an approximate parallel case as generally understood in engineering. At the same time, the term "perpendicular" includes not only an absolute perpendicular case, but also an approximate perpendicular case as generally understood in engineering.

In the present disclosure, a battery cell may include a lithium-ion secondary battery cell, a lithium-ion primary battery cell, a lithium-sulfur battery cell, a sodium-lithium ion battery cell, a sodium-ion battery cell or a magnesium ion battery cell, etc., which is not limited in embodiments of the present disclosure.

The battery referred to in embodiments of the present disclosure means a single physical module comprising one or more battery cells to provide a higher voltage and capacity. For example, a battery referred to in the present disclosure may be a battery module or battery pack, etc. A battery generally includes a box for encapsulating one or more battery cells. The box can prevent liquid or other foreign matter from affecting charging or discharging of battery cells.

A battery cell includes an electrode assembly, which is provided with a positive pole sheet, a negative pole sheet and an isolating membrane, and electrolyte. The battery cell works primarily by moving metal ions between the positive and negative pole sheets. The positive pole sheet includes a positive collector and a positive active substance layer coated on a surface of the positive collector. The positive collector fluid includes a positive collecting part and a positive pole tab. The positive collecting part is coated with a positive active substance layer, while the positive pole tab is not coated with the positive active substance layer. Take the lithium-ion battery as an example, material of the positive collector can be aluminum, and the positive active material layer includes positive active material, which can be lithium cobaltate, lithium iron phosphate, lithium ternary or lithium manganate. The negative pole sheet includes a negative collector and a negative active material layer coated on a surface of the negative collector. The negative collector includes a negative collecting part and a negative pole tab. The negative collecting part is coated with a negative active substance layer, while the negative pole tab is not coated with a negative active substance layer. Material of the negative collector can be copper, the negative active material layer includes the negative active material which can be carbon or silicon, etc. The material of the isolating membrane can be PP (polypropylene, polypropylene) or PE (polyethylene).

The battery cell also includes a housing and an end cover. The housing is provided with an opening, the end cover covers and seals the opening to form a sealed space for accommodating the electrode assembly and the electrolyte.

The housing is in a hollow structure, which can be made by stamping a plate, winding a plate, welding a plate, etc. Some types of housings, for example, are made from coiled plates. This type of housing requires welding at a joint of the coiled plates, which creates welds (e.g. a welding seam) in the housing. A surface of the welding part is uneven. When the battery cell vibrates, the electrode assembly may squeeze the welding part. As a result, the isolating membrane of the electrode assembly may be punctured by the welding part, resulting in short circuit and safety risks. Of course, other kinds of housings that need to be formed by welding process also have the above problems.

In view of this, in a technical solution provided in the embodiment of the present disclosure, an isolating member is provided inside the battery cell to cover at least part of the welding part and to isolate the electrode assembly from the welding part, to reduce the risk of the electrode assembly being punctured by the welding part and to improve safety.

The technical solution described in the embodiment of the present disclosure applies to batteries and electrical devices using batteries.

Electric devices can be vehicles, mobile phones, portable devices, laptops, ships, spacecraft, electric toys and power tools, etc. Vehicles can be fuel vehicles, gas vehicles or new energy vehicles. The new energy vehicles can be pure electric vehicles, hybrid vehicles or extended-range vehicles, etc. The spacecraft includes aircraft, rockets, space shuttles, spaceships, etc. The electric toys include stationary or mobile electric toys, such as game consoles, electric car toys, electric ship toys and electric aircraft toys, etc. The power tools include metal cutting power tools, grinding power tools, assembly power tools and railway power tools, such as electric drill, electric grinder, electric wrench, electric screwdriver, electric hammer, impact drill, concrete vibrator and electric planer, etc. No special restrictions will be placed on the above electrical devices in the embodiment of the present disclosure.

Following embodiments, for the sake of illustration, take an electric device as an example of a vehicle.

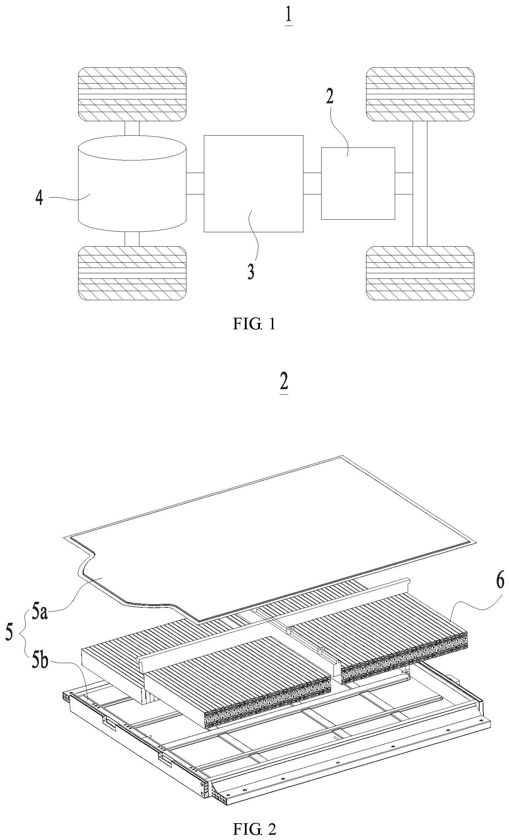

FIG. 1 shows a structural diagram of a vehicle provided in some embodiments of the present disclosure.

As shown in FIG. 1, a vehicle 1 is provided with a battery 2 inside. The battery 2 can be provided at the bottom or at the head or tail of the vehicle 1. The battery 2 can be used to power vehicle 1. For example, battery 2 can be used as an operating power source for vehicle 1.

The vehicle 1 may also include a controller 3 and a motor 4. The controller 3 is used to control the battery 2 to supply power to the motor 4, for example, for vehicle's starting, navigation, and operating electricity requirements while driving.

In some embodiments of the present disclosure, the battery 2 may be used not only as an operating power source for the vehicle 1, but also as a driving power source for the vehicle 1, providing driving power for the vehicle 1 instead or in part instead of fuel oil or natural gas.

FIG. 2 is an exploded diagram of a battery provided in some embodiments of the present disclosure.

As shown in FIG. 2, the battery 2 comprises a box 5 and a battery cell 6 accommodated in the box 5.

The box 5 is used to accommodate the battery cell 6. The box 5 can be of a variety of structures. In some embodiments, the box 5 may include a first box part 5a and a second box part 5b. The first box Part 5a covers the second box part 5b, and the first box part 5a and the second box part 5b jointly define an accommodation space used to house the battery cell 6. The second box part 5b can be in a hollow structure provided with one open end, and the first box part 5a is in a plate-shaped structure and covers the second box part 5b at an open side, in order to form the box 5 with the accommodation space. Both the first box part 5a and the second box part 5b can be in a hollow structure with one open side, the open side of the first box part 5a covers the open side of the second box part 5b, in order to form the box 5 with the accommodation space. Of course, the first box part 5a and the second box part 5b can be in a variety of shapes, such as cylinder, cuboid and so on.

In order to improve a sealing of the first box part 5a and the second box part 5b that have been connected, the first box part 5a and the second box part 5b can also be provided with sealing parts, such as sealant, sealing rings, etc.

Assuming that the first box part 5a covers on top of the second box part 5b, the first box part 5a can also be referred to as an upper box cover and the second box part 5b can also be referred to as a lower box.

In the battery 2, one or more battery cells 6 can be provided. If there are multiple battery cells 6, the battery cells 6 can be connected in series or parallel or hybrid connection, and the hybrid connection means that the multiple battery cells 6 are connected in series and in parallel.

The multiple battery cells 6 can be directly in series or parallel or hybrid connection, and then the multiple battery cells 6 as a whole are accommodated in the box 5. Of course, the multiple battery cells 6 can be in series or parallel or hybrid connection to form a battery module, and multiple battery modules are in series or parallel or hybrid connection and as a whole accommodated in the box 5.

In some embodiments, the battery cells 6 as a whole are installed directly in the box 5. In this way, a process of assembling the multiple battery cells 6 into the battery module and a fixed frame used to fix the battery cells 6 in the battery module can be omitted, which can simplify a structure of the battery and improve an energy density of the battery.

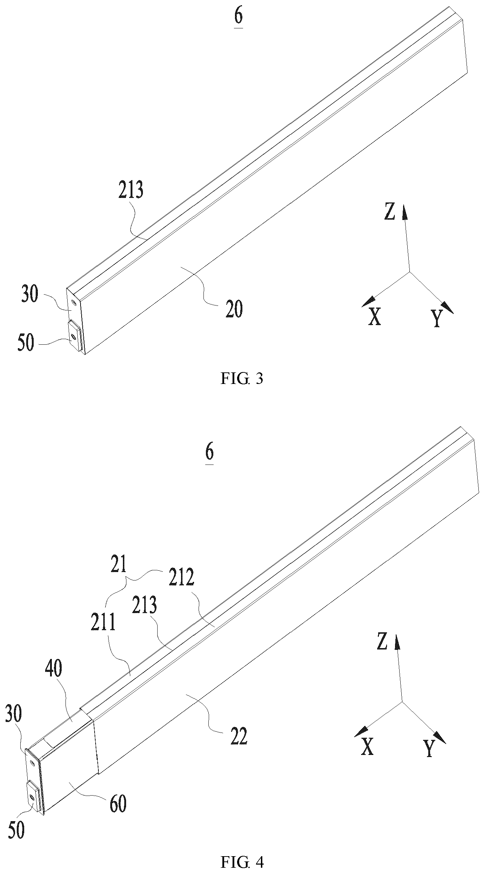

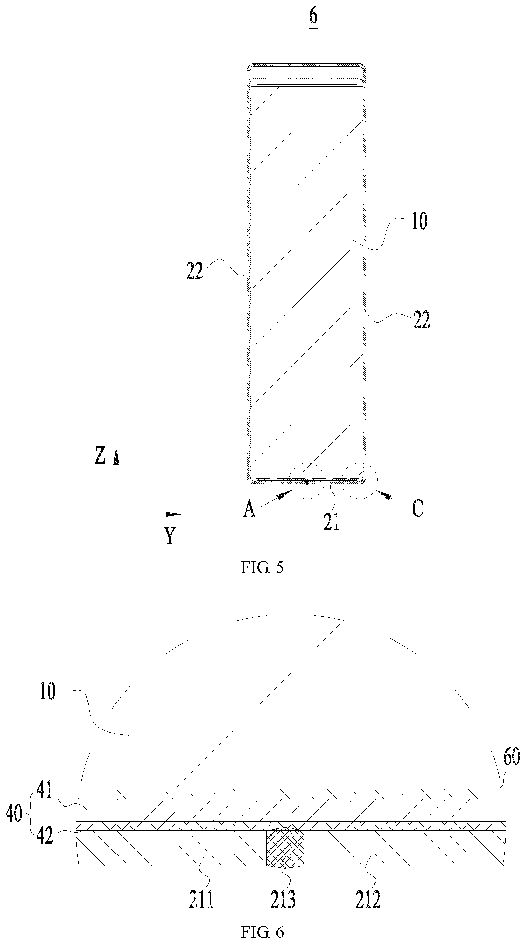

FIG. 3 is a perspective structural diagram of a battery cell provided in some embodiments of the present disclosure. FIG. 4 is an exploded diagram of the battery cell as shown in FIG. 3. FIG. 5 is a schematic sectional diagram of the battery cell as shown in FIG. 3. FIG. 6 is an enlarged diagram of the battery cell at a circle A as shown in FIG. 5.

As shown in FIG. 3 to FIG. 6, the battery cell 6 in an embodiment of the present disclosure comprises an electrode assembly 10, a housing 20, an end cover 30 and an isolating member 40. The housing 20 is provided with an opening at its end along a first direction X, and includes a first side plate 21 with a first plate body 211 and a second plate body 212 arranged along a second direction Y The first plate body 211 and the second plate body 212 are welded to form a welding part 213 extending to the opening, and the second direction Y is perpendicular to the first direction X. The electrode assembly 10 is accommodated in the housing 20. The end cover 30 is used to cover the opening. The isolating member 40 is arranged between the first side plate 21 and the electrode assembly 10 and is attached to the first side plate 21 and covers at least part of the welding part 213 to isolate the electrode assembly 10 from the welding part 213.

The housing 20 is in a hollow structure, within which an accommodation chamber is formed to accommodate the electrode assembly 10 and an electrolyte. The housing 20 can be in a variety of shapes, such as cylinder, cuboid and so on. The shape of the housing 20 can be determined according to a specific shape of the electrode assembly 10. For example, if the electrode assembly 10 is in a cylindrical structure, a cylindrical housing can be selected. If the electrode assembly 10 is in a cuboid structure, a cuboid housing can be selected.

The end cover 30 is sealed and connected with the housing 20 to form a sealed space for accommodating the electrode assembly 10 and the electrolyte. For example, the end cover 30 is connected to the housing 20 by welding, bonding, clamping or other means.

In some examples, the housing 20 is provided with the opening at its end along the first direction X, and one end cover 30 is provided and covers the opening of the housing 20. In other examples, the housing 20 is provided openings at both ends in the first direction X, and two end covers 30 are provided and covers the two openings of the housing 20, respectively.

The housing 20 can be made from one sheet under bending, welding, etc., or from multiple sheets welded.

For example, both the first plate body 211 and the second plate body 212 are roughly flat plates, and both are parallel to the first direction X.

The welding part 213 is in a bar structure with ends extend to two edges of the first plate body 211 along the first direction X. The extension direction of welding part 213 may be parallel to the first direction X or may intersect the first direction X.

In some examples, the first plate body 211 is abutted against and the second plate body 212 in the second direction Y, and laser is applied to a joint between the first plate body 211 and the second plate body 212 to weld the first plate body 211 and the second plate body 212 and form the welding part 213. In other examples, the first plate body 211 and the second plate body 212 partially overlap in the third direction Z, and the laser is applied to an overlapping area between the first plate body 211 and the second plate body 212 to weld the first plate body 211 and the second plate body 212 and form the welding part 213. For example, the first direction X, the second direction Y, and the third direction Z are perpendicular in pairs.

The electrode assembly 10 is a core component of the battery cell 6 to realize charge and discharge function, and includes a first pole sheet, a second pole sheet and an isolating membrane. Polarities of the first pole sheet and the second pole sheet are opposite, and the isolating membrane is used to insulate and isolate the first pole sheet and the second pole sheet. The electrode assembly 10 works mainly by metal ions moving between the first pole sheet and the second pole sheet.

One of the first pole sheet and the second pole sheet is provided as a positive pole sheet, and the other of the first pole sheet and the second pole sheet is provided as a negative pole sheet.

The electrode assembly 10 may be in a winding structure, a stacked structure or other structure. One or more first pole sheets may be provided, and one or more second pole sheets may be provided. The number of the first pole sheets and the second pole sheets can be determined according to the structure of the electrode assembly 10.

One or more electrode assemblies 10 may be provided, and the number is not restricted in this embodiment.

Attaching the isolating member 40 to the first side plate 21 means forming the isolating member 40 on the first side plate 21 by adhesion, coating, spraying or other means. By attaching, the isolating member 40 can be connected to the first side plate 21, to reduce or avoid a movement of the isolating member 40 with respect to the first side plate 21.

The isolating member 40 may be attached to at least one of the first plate body 211, the second plate body 212 and the welding part 213.

The isolating member 40 may fully cover the welding part 213 or only partially cover the welding part 213. The term "cover" in this embodiment means a coverage from the inside.

In some examples, the isolating member 40 isolates the electrode assembly 10 from the first side plate 21 in the third direction Z. Optionally, in the third direction Z, the isolating member 40 as a whole is positioned between the first side plate 21 and the electrode assembly 10.

In the embodiment of the present disclosure, the housing 20 is prepared in a welding process. Compared with a traditional housing prepared in a stamping process, the housing 20 in the embodiment of the present disclosure can have a larger size in the first direction X, thus increasing a capacity of the battery cells 6.

In this embodiment, the isolating member 40 can isolate the electrode assembly 10 from the welding part 213, thereby reducing a risk of the electrode assembly 10 being punctured by the welding part 213 and improving safety. Since the isolating member 40 covers at least part of the welding part 213, the isolating member 40 can shield residual particles on the welding part 213, reduce a risk of short circuit caused by particles falling into the electrode assembly 10 and improve safety.

In some embodiments, the battery cell 6 also includes two electrode terminals 50 mounted on the end cover 30. The two electrode terminals 50 are used to be electrically connected to the first pole sheet and the second pole sheet respectively to output electrical energy generated by the electrode assembly 10.

In some embodiments, the housing 20 is in a structure with openings on both sides, and two end covers 30 are provided. The two end covers 30 respectively covers the two openings of the housing 20. Optionally, the two electrode terminals 50 are installed on respective end covers 30.

In some embodiments, the battery cell 6 also includes an insulating sheet 60 wrapped around an outer side of the electrode assembly 10 and used to insulate and isolate the electrode assembly 10 from the housing 20. The thickness of insulating sheet 60 is less than that of the isolating member 40.

In some embodiments, a dimension of the housing 20 along the first direction X are 100mm-2000mm.

For example, the dimension of the housing 20 along the first direction X is 100 mm, 150 mm, 400 mm, 600 mm, 1000 mm, 1200 mm, 1500 mm, or 2000 mm.

For example, the first direction X is parallel to a length direction of the battery cell 6.

In this embodiment, the dimension of the batter cell 6 along the first direction X is long enough to match the dimension of the box. Multiple battery cells 6 can be arranged in parallel in the box directly without assembling the battery cells 6 into a battery module. Thus a frame structure used to fix the battery cells 6 in the battery module can be omitted. Thus, an internal space of the battery is saved, a space utilization rate and energy density of the battery are improved, and an assembly process of the battery cells 6 is simplified and the cost is reduced.

In this embodiment, the dimension of the housing 20 along the first direction X is large, which may be easily broken if it is manufactured in a stamping process. In this embodiment, the housing 20 with a large dimension is prepared in a welding process so as to ensure the strength of the housing 20.

In some embodiments, the housing 20 is provided with openings along both ends of the first direction X, and the housing 20 is in a cylindrical structure formed by bending a flat plate. A joint of the cylindrical structure is welded to form the welding part 213. This embodiment can simplify the forming process of the housing 20 and ensure the strength of the housing 20.

In other embodiments, the housing 20 is provided with openings at both ends along the first direction X. The housing 20 is in a cylindrical structure formed two U-shaped plates that are abutted. Two joints of the cylindrical structure are welded to form welding parts 213.

In some embodiments, the isolating member 40 includes a substrate 41 and a bonding layer 42, the substrate 41 covers at least part of the welding part 213, and the bonding layer 42 is located between and bonded to the substrate 41 and the first side plate 21.

The bonding layer 42 is bonded to at least one of the first plate body 211, the second plate body 212 and the welding part 213 to connect the substrate 41 to the first side plate 21. For example, the bonding layer 42 is simultaneously bonded to the first plate body 211, the second plate body 212, and the welding part 213.

The substrate 41 covering at least part of the welding part 213 means that a projection of the substrate 41 in the third direction Z overlaps at least part of a projection of the welding part 213 in the third direction Z.

The substrate 41 may cover only part of the welding part 213 or completely cover the welding part 213.

In this embodiment, the bonding layer 42 ensures a connection strength between the substrate 41 and the first side plate 21, and simplifies an assembly process of the isolating member 40 and the first side plate 21.

In some embodiments, when the housing 20 and the isolating member 40 are assembled, an adhesive may be coated on the first side plate 21, and then the substrate 41 is extended into the housing 20 and bonded to the adhesive. After curing, the boding layer 42 is formed, and the bonding layer 42 and the substrate 41 form the isolating member 40. In other embodiments, when the housing 20 and the isolating member 40 are assembled, the adhesive may be coated on an surface of the substrate 41, and then the substrate 41 coated with the adhesive may be extended into the housing 20 and the adhesive may be bonded to the first side plate 21. After curing, the bonding layer 42 is formed, and the bonding layer 42 and the substrate 41 form the isolating member 40.

In some embodiments, at least part of the bonding layer 42 is bonded to the welding part 213.

In this embodiment, the bonding layer 42 is viscous and can be bonded to residual particles on a surface of the welding part 213 to fix the particles, thereby reducing a risk of short circuit caused by particles falling into the electrode assembly 10, and improving safety.

In some embodiments, a hardness of the substrate 41 is greater than that of the bonding layer 42.

In this embodiment, the substrate 41 has greater hardness and is less likely to be pierced by the welding part 213 than the bonding layer 42. In this way, the substrate 41 can effectively separate the welding part 213 from the electrode assembly 10 to reduce a risk of short circuit and improve safety.

In some embodiments, a thickness of the substrate 41 is greater than that of the bonding layer 42.

In this embodiment, an amount of the bonding layer 42 can be saved and a risk of the substrate 41 being punctured by the welding part 213 can be reduced when a thickness of the isolating member 40 is constant.

In some embodiments, in at least one of the battery cells 6, the first side plate 21 is arranged on a lower side of the electrode assembly 10 along a vertical direction.

Since the first side plate 21 is located below the electrode assembly 10, the electrode assembly 10 will squeeze the first side plate 21 under an action of gravity. If the isolating member 40 is not provided, the electrode assembly 10 is prone to squeeze the welding part 213 under an action of gravity, and will be punctured by the welding part 213, thereby leading to a risk of short circuit. In this embodiment of the present disclosure, the risk of electrode assembly 10 being punctured by the welding part 213 is reduced and safety is improved by the isolating member 40 provided to separate the electrode assembly 10 from the first side plate 21.

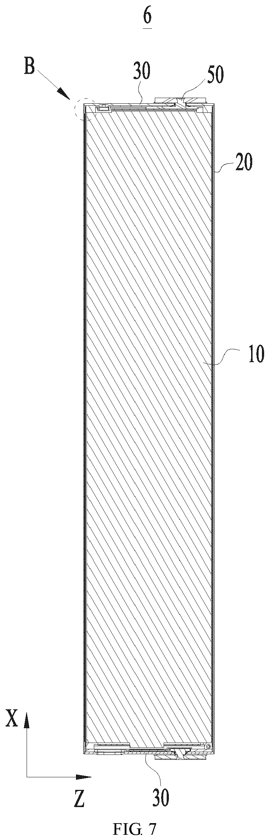

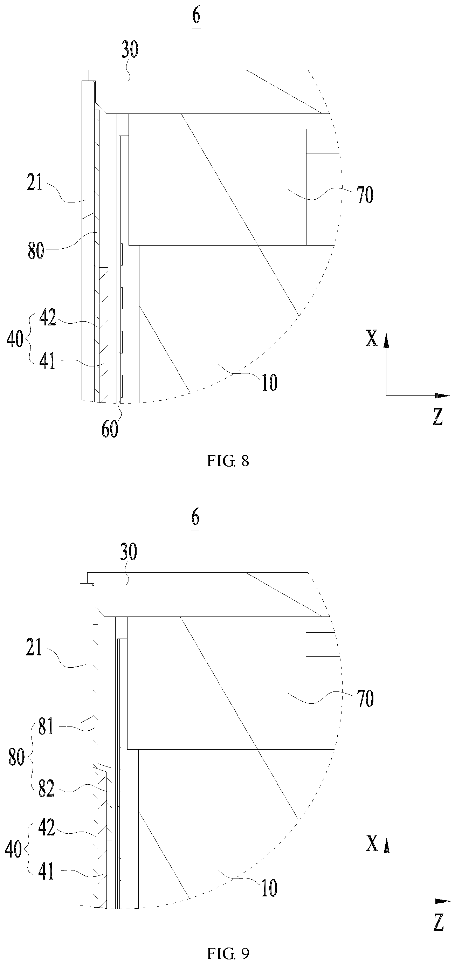

FIG. 7 is another sectional diagram of the battery cell as shown in FIG. 3. FIG. 8 is an enlarged diagram of the battery cell at a circle B as shown in FIG. 7.

As shown in FIG. 7 and FIG. 8, in some embodiments, the battery cell 6 also includes an insulating member 70. The insulating member 70 is arranged on a side of the end cover 30 facing the electrode assembly 10 and is used to insulate and isolate the end cover 30 from the electrode assembly 10. The insulating member 70 and the substrate 41 are arranged at X intervals in the first direction.

The insulating member 70 is used to insulate and isolate the end cover 30 and the electrode assembly 10 to reduce a risk of short circuit. The material of the insulating member 70 may be plastic. For example, the material of the insulating member 70 is polypropylene.

A projection of the insulating member 70 in the third direction Z does not overlap a projection of the substrate 41 in the third direction Z.

In this embodiments, the insulating member 70 and the substrate 41 are arranged at X intervals in the first direction to reduce a risk of interference between the insulating member 70 and the substrate 41 during an extension process of the insulating member 70 into the housing 20, to prevent the insulating member 70 from interfering the substrate 41 and ensure that substrate 41 is fixed on the first side plate 21.

In some embodiments, the insulating member 70 is pressed against an end face of the electrode assembly 10 facing the end cover 30 to limit the electrode assembly 10 in the first direction X and reduce a shaking amplitude of the electrode assembly 10 when the battery cell 6 vibrates, so as to improve safety.

In some embodiments, the battery cell 6 also includes a bonding member 80. The bonding member 80 is at least partially located between the first side plate 21 and the insulating member 70, and bonded to a part of the welding part not covered by the isolating member 40.

The bonding member 80 may be bonded to the welding part alone or simultaneously to the welding part, the first plate body and the second plate body.

The bonding member 80 may be provided as an independent member. For example, the bonding member 80 may be an adhesive tape or an adhesive paper. Alternatively, the bonding member 80 can be integrally formed with the bonding layer 42.

In this embodiment, the bonding member 80 is able to be bonded to particles remaining on a surface of the welding part to reduce a risk of short circuit caused by particles falling into the electrode assembly 10. The bonding member 80 can also separate the insulating member 70 from the welding part, thereby reducing a risk of the insulating member 70 being scratched by the welding part and improving safety.

In some embodiments, a thickness of the bonding member 80 is less than that of the isolating member 40.

In this embodiment, the bonding member 80 has a small thickness, which can reduce a risk of the insulating member 70 squeezing the bonding member 80 during the process of the insulating member 70 extending into the housing 20, and reduce a possibility of the bonding member 80 falling off, thus ensuring a safety performance.

In some embodiments, the bonding member 80 and the bonding layer 42 are integrated formed.

For example, during an assembly of the battery cell 6, the adhesive may be at first coated on the first side plate 21, and a size of the adhesive coated along the first direction X is greater than a size of the substrate 41 along the first direction X. Then the substrate 41 extends into the housing 20 and is bonded to the adhesive. A part of the adhesive that overlaps with the substrate 41 forms the bonding layer 42 after curing, and a part of the adhesive that does not overlap with the substrate 41 forms the bonding member 80 after curing.

In this embodiment, a forming process of the bonding member 80 and the bonding layer 42 can be simplified, and an assembly efficiency of the battery cell 6 is improved.

In some embodiments, a thickness of the bonding member 80 is equal to a thickness of the bonding layer 42.

In some embodiments, at least part of the end cover 30 extends through an opening into and is welded to the housing 20. An end of the welding part close to the opening shall be welded with the end cover 30. In order to avoid an interference between the adhesive member 80 and the end cover 30, the bonding member 80 and the end cover 30 shall be spaced apart in the first direction X.

A part of the welding part to be welded to the end cover 30 can be polished to ensure a connection strength and tightness between the end cover 30 and the housing 20.

FIG. 9 is a schematic partial sectional diagram of a of a battery cell provided in some other embodiments of the present disclosure.

As shown in FIG. 9, in some embodiments, the bonding member 80 includes a first bonding part 81 and a second bonding part 82 arranged continuously. The first bonding part 81 and the isolating member 40 are arranged in the first direction X and is used to be bonded with the welding part. At least part of the second bonding part 82 is bonded to a surface of the substrate 41 facing the electrode assembly 10.

In this embodiment, the first bonding part 81 can be bonded to a part of the welding part that is not covered by the isolating member 40, thereby fixing the particles remaining on a surface of the welding part to reduce a risk of short circuit caused by particles falling into the electrode assembly 10. Since the first bonding part 81 is connected to the first side plate 21 and the second bonding part 82 is connected to the substrate 41, the bonding member 80 can also fix the substrate 41 to the first side plate 21, to improve a connection strength between the first side plate 21 and the substrate 41 and reduce a risk of the substrate 41 falling off.

For example, the adhesive member 80 is provided as an adhesive tape or adhesive paper.

In other embodiments, the bonding member may also be located as a whole on a side of the isolating member in the first direction and connected to an end of the isolating member near the end cover.

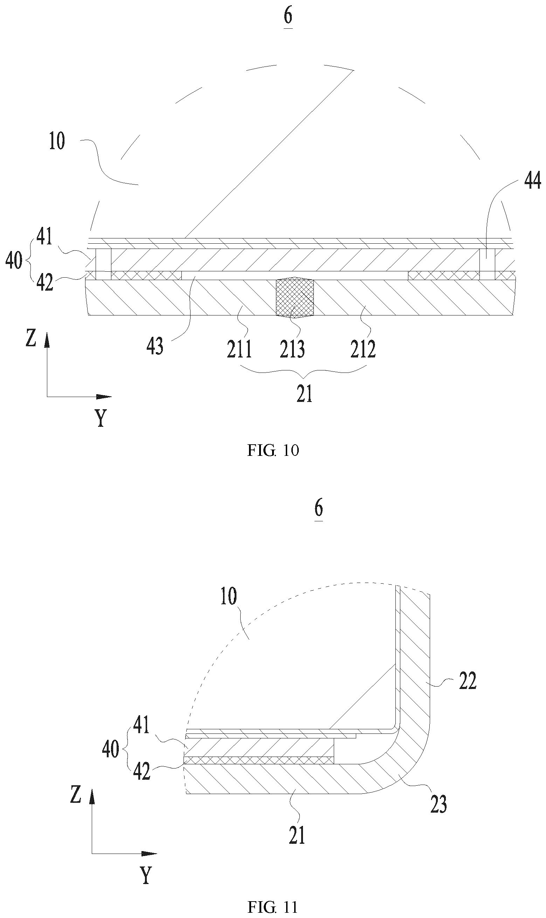

FIG. 10 is a partial sectional diagram of a battery cell provided in some embodiments of the present disclosure.

As shown in FIG. 10, in some embodiments, a surface of the isolating member 40 facing the first side plate 21 is provided with a concave part 43, which is used to accommodate at least part of the welding part 213.

In this embodiment, the concave part 43 can provide an accommodation space for the welding part 213 to reduce a contact area and pressure between the welding part 213 and the isolating member 40, thereby reducing a risk of the isolating member 40 punctured by the welding part 213.

In some embodiments, the bonding layer 42 is a ring structure, the part of which forms a concave part 43. The annular bonding layer 42 can seal some particles remaining at welding part 213 in concave part 43, thus reducing the risk of particles falling into electrode assembly 10.

In some embodiments, a surface of the isolating member 40 away from the first side plate 21 is provided with an opening 44 staggered with the welding part 213.

The opening 44 extends from a surface of the isolating member 40 away from the first side plate 21 in a direction facing the first side plate 21. One or more openings 44 can be provided.

In a thickness direction of the first side plate 21, a projection of the opening 44 does not overlap that of the welding part 213.

In this embodiment, the opening 44 is provided to reduce a weight of the isolating member 40 and provide more room for the electrolyte, so as to improve performance of the battery cell 6. In this embodiment, the opening 44 and the welding part 213 are staggered to reduce a risk that the welding part 213 passes through the isolating member 40 through the opening 44 and improve safety.

FIG. 11 is an enlarged diagram of the battery cell at a circle C as shown in FIG. 5.

As shown in FIG. 11, in some embodiments, the housing 20 also includes two second side plates 22 arranged along the second direction Y One second side plate 22 is connected to the first plate body through a transition plate 23, and the other second side plate 22 is connected to the second plate body through another transition plate 23. An inner surface of the transition plate 23 is an arc surface, and the isolating member 40 supports the electrode assembly 10 so that the minimum spacing between the pole sheet of the electrode assembly 10 and the arc surface is greater than a preset value.

For example, the first plate body is perpendicular to one of the aforementioned second side plates 22, and the second plate body is perpendicular to the other of the aforementioned second side plates 22. Optionally, the first plate body, one of the aforementioned second side plates 22 and one of the aforementioned transition plates 23 are integrally formed; while the second plate body, the other of the aforementioned second side plates 22 and the other of the aforementioned transition plates 23 are integrally formed.

The transition plates 23 are provided as rounded corners of the housing 20 formed during a molding process. In this embodiment, as the transition plates 23 are provided, sharp angled portions of the housing 20 can be removed to reduce a stress concentration and improve a strength of the housing 20. An inner surface of the first plate body is tangent to an inner surface of a respective transition plate 23, and the second plate body is tangent to an inner surface of a respective transition plate 23.

The preset value varies according to design requirements. This preset value may be set considering a combination of a shape and a size of the housing 20 and a shape and a size of the electrode assembly 10. For example, the preset value is 0.1 mm-5 mm.

The inventor found that when the first side plate 21 is located under the electrode assembly 10 in the vertical direction, the electrode assembly 10 may squeeze an inner surface of the transition plate 23 under an action of gravity. And as the inner surface of the transition plate 23 is a circular surface, the inner surface of the transition plate 23 is prone to squeeze the pole sheet of the electrode assembly 10 under the condition of vibration and impact. As a result, an active substance of the pole sheet will fall off, leading to safety risks. The isolating member 40 in this embodiment can support the electrode assembly 10, so that the minimum spacing between the pole sheet and the arc surface of the electrode assembly 10 is greater than the preset value, thus reducing the force transmitted to the end of the pole sheet, reducing the risk of an active substance falling off from the pole sheet, and improving the safety.

In some embodiments, a radius of the arc surface is defined as R, a thickness of the isolating member 40 is defined as T, and T and R satisfy: 0.5R≤T≤2R.

The smaller a value of T/R, the smaller a distance between the pole sheet and the arc surface, and the greater a pressure of the pole sheet during the vibration of the battery cell 6. The larger the value of T/R, the larger the space occupied by the isolating member 40, the lower the utilization rate of the space inside housing 20, and the lower the energy density of the battery cell 6. The inventor performed an experiment with a T/R limit of 0.5-2 to balance the safety and energy density of the battery cell 6.

In some embodiments, the first side plate 21 and the second side plate 22 are provided as roughly rectangular plates.

In some embodiments, an area of the second side plate 22 is greater than that of the first side plate 21. For example, a dimension of the second side plate 22 along the first direction is equal to a dimension of the first side plate 21 along the first direction.

In some embodiments, the housing is roughly in a hollow rectangular shape. Specifically, the housing also includes a third side plate. The third side plate and the first side plate 21 are arranged opposite to each other along the third direction Z. The third side plate is connected to the two second side plates 22 respectively by two transition plates 23 at its both ends along the second direction Y

In some embodiments, the dimension of the battery cell 6 along the first direction is greater than the dimension of the battery cell 6 along the second direction Y and the dimension of the battery cell 6 along the third direction Z. Limited space for the battery is left in the vertical direction in the vehicle. To reduce the height of the battery in the vertical direction, the first direction can be parallel to the horizontal direction, which reduces the maximum dimension of the battery in the vertical direction.

In some embodiments, the dimension of the battery cell 6 along the third direction Z is greater than the dimension of the battery cell 6 along the second direction Y Optionally, in the battery, the battery cell 6 can be placed laterally. When the battery cell 6 is placed laterally, the third direction Z is parallel to the vertical direction.

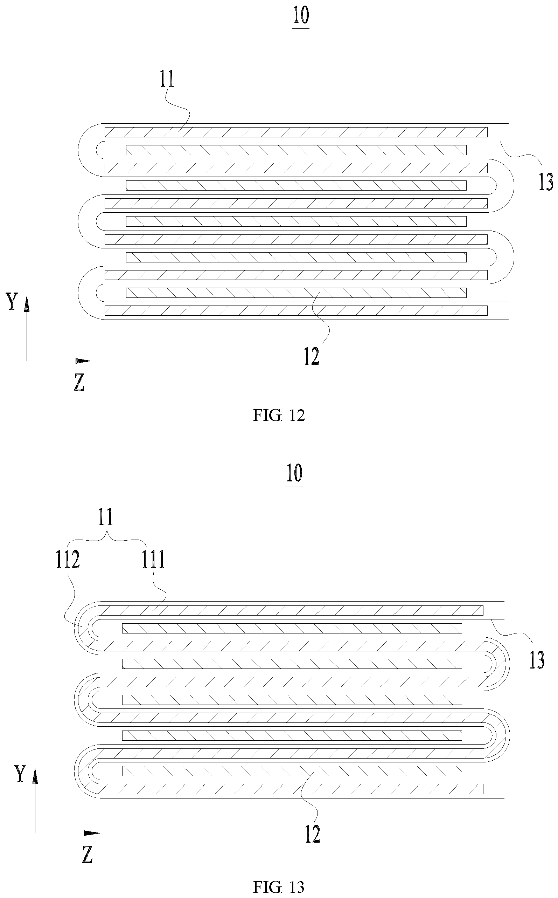

FIG. 12 is a schematic diagram of an electrode assembly of a battery cell provided in some embodiments of the present disclosure.

As shown in FIG. 11 and FIG. 12, in some embodiments, the electrode assembly 10 includes a plurality of first pole sheets 11 and a plurality of second pole sheets 12. The plurality of first pole sheets 11 and the plurality of second pole sheets 12 are stacked alternately along the second direction Y, and polarities of the first pole sheets 11 and the second pole sheets 12 are opposite.

The second direction Y is parallel to the thickness direction of the first pole sheets 11 and the thickness direction of the second pole sheets 12. For example, the first pole sheets 11 and the second pole sheets 12 are provided as rectangular plates arranged parallel to each other.

During a charging process, the electrode assembly 10 will expand. Specifically, an expansion of the first pole sheets 11 and the second pole sheets 12 is the largest in their own thickness direction. Therefore, the expansion of electrode assembly 10 in the second direction Y is greater than that of electrode assembly 10 in the third direction Z, and an extrusion pressure between the electrode assembly 10 and the first side plate 21 is less than that between the electrode assembly 10 and the second side plate 22.

The welding part is formed on the first side plate 21 when the housing is prepared in this embodiment of the present disclosure. Compared with the scheme of forming the welding part on the second side plate 22, in this embodiment, a force exerted by the electrode assembly 10 on the isolating member 40 during expansion can be reduced, thereby reducing the risk of the electrode assembly 10 and the isolating member 40 punctured by the welding part and improving safety.

The electrode assembly 10 is roughly in a rectangular structure, and its surface facing the first side plate 21 is approximately flat, so the space between the electrode assembly 10 and the first side plate 21 is small. The electrode assembly 10 may squeeze the inner surface of the transition plate 23 under an action of gravity. In this embodiment, the isolating member 40 can support the electrode assembly 10 to increase the space between the electrode assembly 10 and the first side plate 21, reduce the force between the pole sheet and the arc surface, reduce the risk of the active substance falling off from the pole sheet, and improve the safety.

In some embodiments, the electrode assembly 10 also includes an isolating membrane 13 insulating the first pole sheets 11 from the second pole sheets 12.

FIG. 13 is a schematic diagram of an electrode assembly of a battery cell provided in some other embodiments of the present disclosure.

As shown in FIG. 11 and FIG. 13, in some embodiments, the electrode assembly 10 comprises the first pole sheet 11 and the plurality of second pole sheets 12. The first pole sheet 11 is continuously bent and includes a plurality of stacked segments 111 and a plurality of bending segments 112, and the plurality of stacked segments 111 and the plurality of second pole sheets 12 are alternately stacked along the second direction Y Each bending segment 112 is used to connect adjacent two stacked segments 111.

The second direction Y is parallel to the thickness direction of the stacked segments 111 and the thickness direction of the second pole sheets 12. For example, the stacked segments 111 and the second pole sheets 12 are provided as rectangular plates arranged parallel to each other.

During the charging process, the electrode assembly 10 will expand. Specifically, an expansion of the first pole sheet 11 and the second pole sheets 12 is the largest in their own thickness direction. Therefore, the expansion of the electrode assembly 10 in the second direction Y is greater than that of the electrode assembly 10 in the third direction Z, and an extrusion pressure between the electrode assembly 10 and the first side plate 21 is less than that between electrode assembly 10 and the second side plate 22.

In this embodiment of the present disclosure, the welding part is formed on the first side plate 21 when the housing is prepared. Compared with the scheme of forming the welding part on the second side plate 22, in this embodiment, a force exerted by the electrode assembly 10 on the isolating member 40 during expansion can be reduced, thereby reducing the risk of the electrode assembly 10 and the isolating member 40 punctured by the welding part and improving safety.

The electrode assembly 10 is roughly is a rectangular structure, and its surface facing the first side plate 21 is approximately flat. Thus the space between the electrode assembly 10 and the first side plate 21 is small. The electrode assembly 10 may squeeze the inner surface of the transition plate 23 under an action of gravity. In this embodiment, the isolating member 40 can support the electrode assembly 10 to increase the space between the electrode assembly 10 and the first side plate 21, reduce the force between the pole sheet and the arc surface, reduce the risk of an active substance falling off from the pole sheet, and improve the safety.

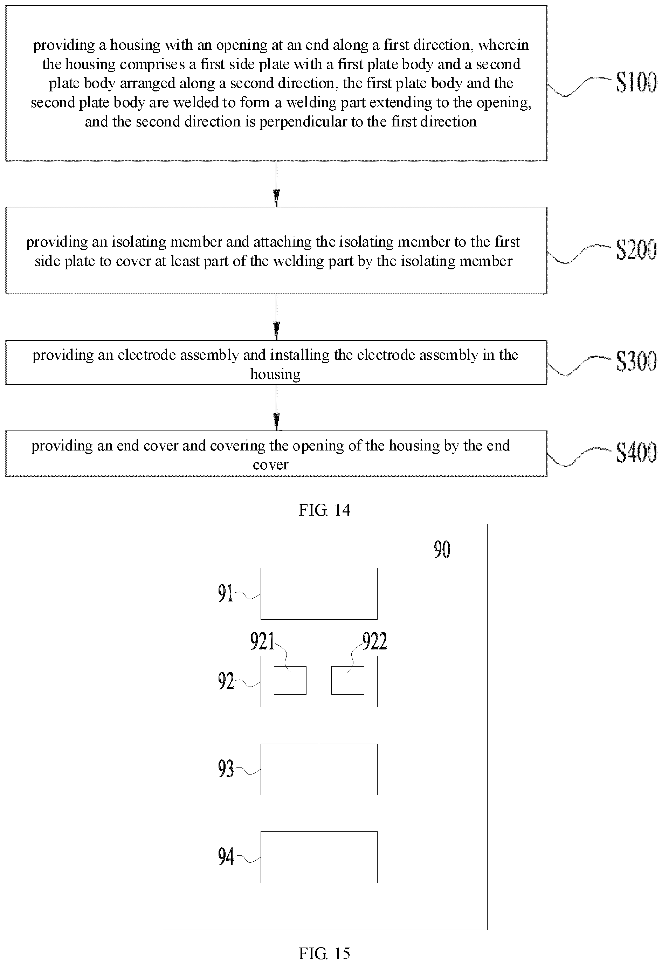

FIG. 14 is a flow diagram of a manufacturing method for a battery cell provided in some embodiments of the present disclosure.

As shown in FIG. 14, the manufacturing method of the battery cell in this embodiment of the present disclosure includes steps of:
S100, providing a housing with an opening at an end along a first direction, wherein the housing includes a first side plate with a first plate body and a second plate body arranged along a second direction, the first plate body and the second plate body are welded to form a welding part extending to the opening, and the second direction is perpendicular to the first direction;
S200, providing an isolating member and attaching the isolating member to the first side plate to cover at least part of the welding part by the isolating member;
S300, providing an electrode assembly and installing the electrode assembly in the housing;
S400, providing an end cover and covering the opening of the housing by the end cover.

The isolating member is arranged between the first side plate and the electrode assembly to isolate the electrode assembly from the welding part

In some embodiments, the step S200 includes:
step S210, coating an adhesive on the first side plate;
step S220, providing a substrate and extending the substrate into the housing to be bonded to the adhesive so that the substrate covers at least part of the welding part.

The adhesive solidifies to form a bonding layer to form the isolating member together with the substrate.

In some embodiments, the step 200 includes:
step S230, providing an substrate and coating an adhesive on a surface of the substrate;
step S240, extending the substrate into the housing and bonding the adhesive to the first side plate and covering at least part of the welding part by the substrate;

The adhesive solidifies to form a bonding layer so as to form the isolating member together with the substrate.

Compared with the adhesive coated inside of the housing, the process of coating the adhesive on the substrate in this embodiment is simpler.

It should be noted that a related structure of the battery cell manufactured by the above-mentioned manufacturing method can be found in the battery cell provided in the above embodiments.

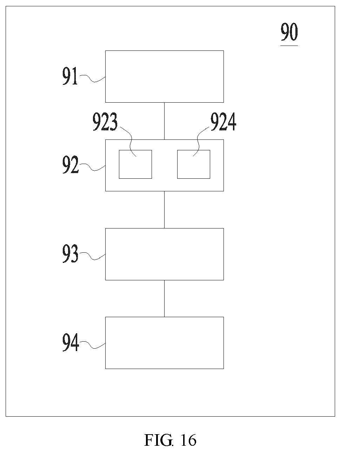

FIG. 15 is a schematic block diagram of a manufacturing system for a battery cell provided in some embodiments of the present disclosure. FIG. 16 is a schematic block diagram of a manufacturing system for a battery cell provided in some other embodiments of the present disclosure.

As shown in FIG. 15 and FIG. 16, a manufacturing system 90 for a battery cell in this embodiment of the present disclosure includes a first providing device 91, a second providing device 92, a third providing device 93 and a fourth providing device 94. The first providing device 91 is used for providing a housing with an opening at an end along a first direction. The housing includes a first side plate with a first plate body and a second plate body arranged along a second direction, the first plate body and the second plate body are welded to form a welding part extending to the opening, and the second direction is perpendicular to the first direction. The second providing device 92 is used for providing an isolating member and attaching the isolating member to the first side plate to cover at least part of the welding part by the isolating member. The third providing device 93 is used for providing an electrode assembly and installing the electrode assembly in the housing. The fourth providing device 94 is used for providing an end cover and covering the opening of the housing by the end cover. The isolating member is arranged between the first side plate and the electrode assembly to isolate the electrode assembly from the welding part.

As shown in FIG. 15, in some embodiments, the second providing device includes a first gluing mechanism 921 and a first assembly mechanism 922. The first gluing mechanism 921 is used to coat the adhesive on the first side plate. The first assembly mechanism 922 is used for providing a substrate, extending the substrate into the housing and bonding it to the adhesive so that the substrate covers at least part of the welding part. The adhesive solidifies to form a bonding layer so as to form the isolating member together with the substrate.

As shown in FIG. 16, in some embodiments, the second providing device 92 includes a second gluing mechanism 923 and a second assembly mechanism 924. The second gluing mechanism 923 is used to provide a substrate and to coat the adhesive on the surface of the substrate. The second assembly mechanism 924 is used for extending the substrate into the housing and bonding the adhesive to the first side plate and covering at least part of the welding part by the substrate. The adhesive solidifies to form a bonding layer so as to form the isolating member together with the substrate

In this embodiment, the second gluing mechanism 923 directly coatings the adhesive on the substrate without extending into the housing, which can simplify the gluing process and improve the assembly efficiency of the battery cell.

The related structure of the battery cell manufactured by the above manufacturing system can be understood referring to the battery cell provided in the above embodiments.

It should be noted that the embodiments in the present disclosure and features in the embodiments may be combined with each other without conflict.

Finally, it should be noted that the above embodiments are intended only to illustrate, and not to restrict, technical solutions of the present disclosure. Notwithstanding a detailed description of the present disclosure by reference to the foregoing embodiments, those skilled in the art should understand that, technical solutions recited in the above-mentioned embodiments may be modified, or equivalent substitution of some of the technical features thereof may be made, but such modification or substitution shall not make an essence of the corresponding technical solution depart from the spirit and scope of the technical solution in the embodiments of the present disclosure.

## Claims

1. A battery cell, comprising:
a housing with an opening at an end along a first direction, wherein the housing comprises a first side plate with a first plate body and a second plate body arranged along a second direction, the first plate body and the second plate body are welded to form a welding part extending to the opening, and the second direction is perpendicular to the first direction;
an electrode assembly accommodated in the housing;
an end cover for covering the opening; and
an isolating member, which is arranged between the first side plate and the electrode assembly, attached to the first side plate and covers at least part of the welding part to isolate the electrode assembly from the welding part.

2. The battery cell of claim 1, wherein the isolating member comprises a substrate and a bonding layer, the substrate covers at least part of the welding part, and the bonding layer is located between and bonded to the substrate and the first side plate.

3. The battery cell of claim 2, wherein at least part of the bonding layer is bonded to the welding part.

4. The battery cell of claim 2 or 3, wherein a hardness of the substrate is greater than a hardness of the bonding layer.

5. The battery cell of any one of claims 2 to 4, further comprising an insulating member arranged on a side of the end cover facing the electrode assembly and used for insulating and isolating the end cover from the electrode assembly;
wherein the insulating member and the substrate are arranged at intervals along the first direction.

6. The battery cell of claim 5, further comprising a bonding member, wherein at least part of the bonding member is located between the first side plate and the insulating member and is bonded to a part of the welding part not covered by the isolating member.

7. The battery cell of claim 6, wherein a thickness of the bonding member is less than a thickness of the isolating member.

8. The battery cell of claim 6 or 7, wherein the bonding member comprises a first bonding part and a second bonding part arranged continuously, the first bonding part and the isolating member are arranged along the first direction and used to be bonded with the welding part, and at least part of the second bonding part is bonded to a surface of the substrate facing the electrode assembly.

9. The battery cell of claim 6 or 7, wherein the bonding member and the bonding layer are integrally formed.

10. The battery cell of any one of claims 1 to 9, wherein a surface of the isolating member facing the first side plate is provided with a concave part which is used to accommodate at least part of the welding part.

11. The battery cell of any one of claims 1 to 10, wherein a surface of the isolating member away from the first side plate is provided with an opening arranged to be staggered with the welding part.

12. The battery cell of any one of claims 1 to 11, wherein the housing is provided with openings at both ends along the first direction, and is in a cylindrical structure formed by bending a flat plate, and a joint of the cylindrical structure is welded to form the welding part.

13. The battery cell of any one of claims 1 to 12, wherein the housing further comprises two second side plates arranged along the second direction, one second side plate is connected to the first plate body through one transition plate, and the other second side plate is connected to the second plate body through another one transition plate; and
an inner surface of the transition plate is formed as an arc surface, the isolating member supports the electrode assembly so that the minimum spacing between a pole sheet of the electrode assembly and the arc surface is greater than a preset value.

14. The battery cell of claim 13, wherein an area of the second side plate is greater than an area of the first side plate.

15. The battery cell of any one of claims 1 to 14, wherein a dimension of the housing along the first direction is ranged from 100 mm to 2000 mm.

16. The battery cell of any one of claims 1 to 15, wherein,
the electrode assembly comprises a plurality of a first pole sheets and a plurality of a second pole sheets alternately stacked along the second direction, and the first pole sheets and the second pole sheets have opposite polarities; or
the electrode assembly comprises a first pole sheet and a plurality of second pole sheets, the first pole plate is continuously bent and comprises a plurality of stacked segments and a plurality of bending segments alternately stacked along the second direction, and respective bending segments are used to connect adjacent two stacked segments.

17. A battery comprising a plurality of battery cells of any one of claims 1 to 16.

18. The battery of claim 17, wherein in at least one of the battery cells, the first side plate is arranged on a lower side of the electrode assembly along a vertical direction.

19. An electrical device comprising the battery of claim 17 or 18 and used to provide electrical energy.

20. A manufacturing method for a battery cell, comprising:
providing a housing with an opening at an end along a first direction, wherein the housing comprises a first side plate with a first plate body and a second plate body arranged along a second direction, the first plate body and the second plate body are welded to form a welding part extending to the opening, and the second direction is perpendicular to the first direction;
providing an isolating member and attaching the isolating member to the first side plate to cover at least part of the welding part by the isolating member;
providing an electrode assembly and installing the electrode assembly in the housing;
providing an end cover and covering the opening of the housing by the end cover;
wherein the isolating member is arranged between the first side plate and the electrode assembly to isolate the electrode assembly from the welding part.

21. The manufacturing method of claim 20, wherein the step of providing an isolating member and attaching the isolating member to the first side plate comprises:
coating an adhesive on the first side plate;
providing a substrate, extending the substrate into the housing and bonding the substrate to the adhesive, so that the substrate covers at least part of the welding part;
wherein the adhesive solidifies to form a bonding layer so as to form the isolating member together with the substrate.

22. The manufacturing method of claim 20, wherein the step of providing an isolating member and attaching the isolating member to the first side plate comprises:
providing an substrate and coating an adhesive on a surface of the substrate; and
extending the substrate into the housing and bonding the adhesive to the first side plate and covering at least part of the welding part by the substrate;
wherein the adhesive solidifies to form a bonding layer so as to form the isolating member together with the substrate.

23. A manufacturing system for a battery cell, comprising:
a first providing device for providing a housing with an opening at an end along a first direction, wherein the housing comprises a first side plate with a first plate body and a second plate body arranged along a second direction, the first plate body and the second plate body are welded to form a welding part extending to the opening, and the second direction is perpendicular to the first direction;
a second providing device for providing an isolating member and attaching the isolating member to the first side plate to cover at least part of the welding part by the isolating member;
a third providing device for providing an electrode assembly and installing the electrode assembly in the housing; and
a fourth providing device for providing an end cover and covering the opening of the housing by the end cover;
wherein the isolating member is arranged between the first side plate and the electrode assembly to isolate the electrode assembly from the welding part.

24. The manufacturing system of claim 23, wherein the second providing device comprises:
a first gluing mechanism used to coat the adhesive on the first side plate; and
a first assembly mechanism for providing a substrate, extending the substrate into the housing and bonding the substrate to the adhesive so that the substrate covers at least part of the welding part;
wherein the adhesive solidifies to form a bonding layer so as to form the isolating member together with the substrate.

25. The manufacturing system of claim 23, wherein the second providing device comprises:
a second gluing mechanism used to provide a substrate and to coat the adhesive on the surface of the substrate; and
a second assembly mechanism for extending the substrate into the housing and bonding the adhesive to the first side plate and covering at least part of the welding part by the substrate;
wherein the adhesive solidifies to form a bonding layer so as to form the isolating member together with the substrate.
